# FASCICULE DE BREVET EUROPEEN

(11) **EP 3 417 932 B1**
(45) Date de publication et mention de la délivrance du brevet: **17.03.2021**
(21) Numéro de dépôt: 18178416.6
(22) Date de dépôt: 19.06.2018
(51) Int. Cl.: B01J 8/02, B01J 8/12

(54) **REACTEURS À LIT FIXE OU MOBILE À ÉCOULEMENT RADIAL COMPRENANT DES INTERNES AMÉLIORÉS**
REAKTOREN MIT FESTBETT ODER BEWEGLICHEN BETT UND RADIALEN DURCHFLUSS AUSGESTATTET MIT VERBESSERTEN INTERNEN KOMPONENTEN.
REACTORS WITH FIXED OR MOVING BED AND RADIAL FLOW WITH IMPROVED INTERNALS.

(30) Priorité: 21.06.2017 FR 1755653
(43) Date de publication de la demande: 26.12.2018
(73) Titulaire: AXENS, 92508 Rueil-Malmaison Cedex (FR)
(72) Inventeur: LAMBERT, Fabian, 78400 CHATOU (FR)
(74) Mandataire: IFP Energies nouvelles

(56) Documents cités:
- FR-A1- 2 836 841
- FR-A1- 3 017 806
- US-B2- 7 749 467

## Description

### CONTEXTE DE L'INVENTION

L'invention concerne les internes des réacteurs des procédés opérés avec des réacteurs à écoulement radial du flux de procédé à traiter (également appelé charge dans la suite de la description), tels que par exemple le reformage catalytique des essences ou la production d'aromatiques tels que les BTX (abréviation de Benzène Toluène et Xylènes). On entend par écoulement radial de la charge le fait que l'écoulement de cette dernière se fait de manière sensiblement horizontale au travers du lit catalytique. Parmi ces réacteurs à écoulement radial de la charge, on peut distinguer les réacteurs en lit mobile et les réacteurs en lits fixes. La présente invention s'applique aussi bien aux réacteurs en lit mobile qu'aux réacteurs en lit fixe.

On entend par lit mobile le fait que l'ensemble du catalyseur, dispersé sous forme de petites particules, s'écoule sensiblement verticalement sous l'effet de la gravité. Ce type d'écoulement en lit mobile se rencontre particulièrement dans les procédés comprenant une régénération en continue du catalyseur, comme le réformage régénératif des essences. La présente invention peut également s'appliquer à des réacteurs en lit fixe, tels que l'hydroalkylation des aromatiques, l'isomérisation des xylènes, etc...

L'invention consiste à améliorer les internes des réacteurs à écoulement radial de type lit mobile ou lit fixe, en augmentant le volume de catalyseur mis en contact avec la charge à traiter par rapport au volume total de catalyseur présent dans le réacteur.

Selon la présente invention, à performance équivalente, le volume du réacteur se trouve donc réduit ou, d'un autre point de vue, à iso volume de réacteur, la quantité de catalyseur disponible pour la réaction est plus importante.

### DESCRIPTION SOMMAIRE DES FIGURES

La figure 1 est une vue schématique d'un réacteur en lit mobile et à écoulement radial selon l'art antérieur.
La figure 2 est une vue schématique d'un réacteur en lit mobile et à écoulement radial selon un mode de réalisation de la présente invention.
La figure 3 est une vue schématique d'un réacteur en lit mobile et à écoulement radial selon un mode de réalisation de la présente invention.
La figure 4 est une vue schématique d'un réacteur en lit mobile et à écoulement radial selon un mode de réalisation de la présente invention.
La figure 5 est une vue schématique d'un réacteur en lit fixe et à écoulement radial selon l'art antérieur.
La figure 6 est une vue schématique d'un réacteur en lit fixe et à écoulement radial selon un mode de réalisation de la présente invention.

### EXAMEN DE L'ART ANTERIEUR

Le brevet US 6,221,320 fait un récapitulatif des technologies conventionnelles en lit mobile.

Selon l'art antérieur, dans le cas des réacteurs radiaux en lit mobile, la zone située en dessous de l'anneau support de la grille externe, et à l'extérieur de la grille interne, contient un certain volume de catalyseur qui ne reçoit pas de flux procédé à traiter. Il s'agit donc d'un volume mort au sens non actif vis-à-vis de la réaction.

Dans d'autres cas selon l'art antérieur, dans le cas des réacteurs radiaux en lit fixe, la zone située en dessous de l'anneau support de la grille externe et à l'extérieur de la grille interne, ne contient pas de catalyseur. En outre, la zone de tête du réacteur ne contient également pas de catalyseur.

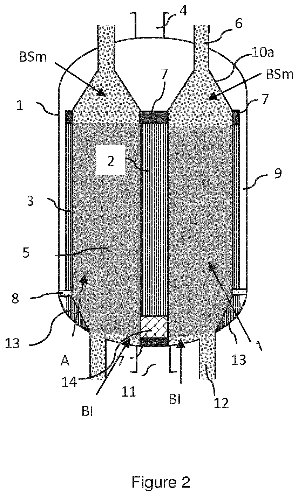

Toujours selon l'art antérieur, en tête des réacteurs radiaux en lit mobile, l'introduction progressive du catalyseur se fait via plusieurs conduites, chacune étant généralement constituée de plusieurs éléments, et étant terminée par une partie conique centrée sur le milieu du lit catalytique. C'est par cette partie conique que le catalyseur est réparti dans la zone catalytique annulaire située entre la grille externe et la grille interne, tout autour du réacteur. Lesdites parties coniques se situent dans la partie la plus haute du lit catalytique, zone dans laquelle la grille externe comporte un morceau de plaque pleine, comme illustré par la figure 2 du brevet US 7,749,467 B2, dans le cas d'une grille externe modulaire. D'autre part, la partie haute de la grille interne comporte également une plaque pleine comme illustré également sur ladite figure 2. En conséquence, la zone située entre ces deux plaques pleines contient du catalyseur qui n'est pas mis en contact avec le flux procédé à traiter.

Les brevets US 3,864,240, US 4,040,794 et FR 2 160 269 décrivent différents types de réacteurs en lit mobile pouvant notamment être utilisés dans un procédé de reformage catalytique des essences. Dans ce type de procédé, le catalyseur circule dans les différents réacteurs de la section réactionnelle, généralement au nombre de trois, quatre, voire cinq, en étant ramené en tête du réacteur de la série à partir du fond du réacteur précédent au moyen d'un système de transport par « lift ». Il est ensuite ramené en tête du régénérateur, puis le catalyseur régénéré est renvoyé vers la section réactionnelle.

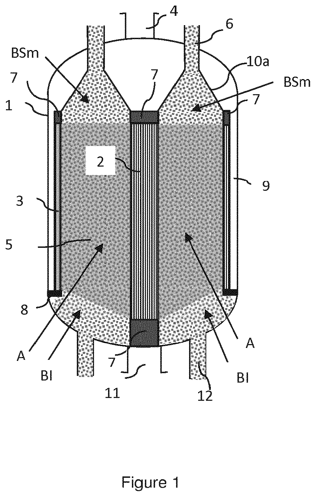

Selon d'autres variantes de l'art antérieur (US 3,706,536) les différentes zones catalytiques sont empilées (on parle alors de « stacked reactor » dans la terminologie anglo-saxonne) pour ne former qu'un seul réacteur comprenant les différentes sections réactionnelles entre lesquelles le catalyseur circule. Il est également possible d'associer un réacteur comprenant plusieurs sections réactionnelles empilées avec un ou plusieurs autres réacteurs comprenant une ou plusieurs sections réactionnelles comme illustré dans la figure 1 du brevet FR 2160269.

Moyennant certaines adaptations accessibles à l'homme du métier, la présente invention concerne aussi bien les zones réactionnelles à réacteurs séparés, que des zones réactionnelles empilées, ou une combinaison des deux modes.

Le brevet US 6,221,320 décrit une technologie dans laquelle la grille interne et la grille externe sont remplacées par un dispositif équivalent constitué d'une pluralité de récipients de catalyseur ou modules dont chacun est un segment de cylindre divisé dans le plan axial (dispositif appelé « catalyst container » dans la terminologie anglo-saxonne). Lesdits modules sont constitués de grilles Johnson. La présente invention peut s'appliquer aussi bien aux modes de réalisation avec une grille interne et une grille externe, qu'aux modes de réalisation utilisant un dispositif du type de celui décrit dans le brevet US 6,221,320.

La présente invention concerne également les réacteurs permettant de récupérer la chaleur à l'intérieur du réacteur, tels que ceux décrits dans le brevet EP 2 225 016.

La demande de brevet FR 2014/51613 décrit un réacteur catalytique en lit mobile dans lequel le catalyseur est enfermé dans des paniers mobiles et munis de bavette, implantée à la partie inférieure desdits paniers. La présente invention concerne également le réacteur décrit dans ce brevet. En effet, il est tout à fait possible de concevoir les bavettes de façon à ce qu'elles soient perméables au flux réactionnel.

### Avec modifications apparentes

La demande de brevet FR 2016/55251 décrit un réacteur dans lequel le catalyseur est contenu dans l'enveloppe du réacteur, et le gaz distribué à travers de multiples distributeurs cylindriques verticaux. La présente invention peut également s'appliquer à ce type de réacteurs.

La demande de brevet FR 2 836 841 décrit un réacteur cylindrique comprenant notamment : une pluralité de conduits internes perforés, disposés à la périphérie du réacteur et parallèles à l'axe du réacteur, qui alimentent un lit radial de particules ; une couronne circulaire supportant les conduits dans le fond inférieur du réacteur ; et un collecteur central perforé, la couronne comportant une grille circulaire verticale percée de trous étanches aux particules, suspendue à la couronne de façon à délimiter avec la paroi du réacteur une chambre annulaire pour la circulation de la charge, la hauteur de la grille étant ajustée de telle façon qu'elle délimite un passage interne entre la grille et le fond du réacteur.

### DESCRIPTION DE L'INVENTION

La présente invention concerne les internes des réacteurs à écoulement radial du flux de procédé à traiter. De préférence ces réacteurs opèrent avec un lit mobile ou un lit fixe de catalyseur, ils sont alors généralement appelés réacteurs en lit fixe ou réacteur en lit mobile. Plus précisément, la présente invention concerne un réacteur selon la revendication 1 à écoulement radial du flux de
procédé à traiter depuis une grille externe (3) jusqu'à une grille interne (2), ou inversement depuis une grille interne (2) jusqu'à une grille externe (3), réacteur dans lequel au moins une des zones contenant du catalyseur qui ne sont pas atteintes par le flux de procédé à traiter (dites zones mortes) présente un volume réduit au minimum, c'est-à-dire :
- la zone inférieure (BI) située entre l'extrémité inférieure de la grille externe (3) et l'extrémité inférieure de la grille interne (2) d'une part, et le fond du réacteur d'autre part,
- et lorsque le réacteur est à lit mobile, la zone supérieure (BSm) située entre l'entrée des jambes d'introduction du catalyseur (6) dans le réacteur au niveau de la virole et l'extrémité supérieure des grilles externe (3) et interne (2), ou l'extrémité inférieure des plaques pleines (7).

Dans le cas d'un réacteur en lit fixe, les zones (BI) et (BSf) ne contiennent généralement pas de catalyseur et sont soit vides de tout solide, soit remplies au moins en partie d'un matériau inerte au plan catalytique. Il s'agit notamment de la zone (BI) préférentiellement remplie en au moins en partie par un solide inerte, et de la zone (BSf) préférentiellement vide, et située entre la tête du réacteur et la plaque pleine (17) qui isole la partie supérieure du lit catalytique. Ces zones peuvent potentiellement être au moins en partie remplies par du catalyseur, sans toutefois constituer des zones mortes, au moyen des internes améliorés du réacteur selon l'invention.

Le réacteur selon l'invention comporte au moins une grille externe supplémentaire (13, 18) présentant une forme adaptée à celle du fond du réacteur ou de la tête du réacteur, ladite grille supplémentaire (13, 18) se situant dans le prolongement de la grille externe (3).

Le terme « forme adaptée » signifie que la forme de la grille externe supplémentaire épouse aussi parfaitement que possible la forme de la virole du réacteur dans la zone du réacteur où elle est disposée.

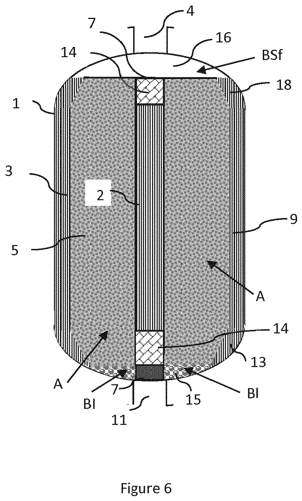

L'expression « dans le prolongement de la grille externe (3) » signifie que la grille externe supplémentaire est soit localisée dans le prolongement direct de de la grille externe (3) (figure 6), c.à.d. la grille externe supplémentaire forme un prolongement de la grille externe (3), soit localisée juste en dessous du support de la grille externe (3) lorsque celui-ci est présent (figure 2).

L'invention concerne plus précisément un réacteur à écoulement radial du flux de procédé à traiter comprenant une virole (5), des moyens d'introduction du flux de procédé à traiter (4) et de sortie des effluents (11), une zone de distribution dudit flux de procédé (9), éventuellement des jambes d'introduction (6) du catalyseur, des grilles externes (3) et internes (2) permettant au flux de procédé à traiter de circuler depuis une grille externe (3) jusqu'à une grille interne (2) située sensiblement au centre du réacteur, dans lequel ledit réacteur comprend au moins une grille externe supplémentaire (13, 18) présentant une forme adaptée à celle du fond du réacteur ou de la tête du réacteur, ladite grille supplémentaire (13, 18) se situant dans le prolongement de la grille externe (3). On reste dans le cadre de la présente invention si le flux de procédé à traiter circule depuis la grille interne (2) jusqu'à la grille externe (3).

En effet, dans un réacteur à écoulement radial, la grille externe (3) repose, dans sa partie basse, sur un support, de préférence un anneau support (8a), ledit support est de préférence ajouré afin de laisser passer le flux procédé à traiter.

Toutefois, il est parfois possible de fixer la grille externe (3) et la grille externe supplémentaire (13), via des moyens différents : grilles externes (3) et (13) suspendues dans le réacteur ou fixées à la virole, par exemple par l'intermédiaire de tout moyen de fixation, par exemple boulonné ou soudé, connu de l'homme du métier. Lesdites grilles externe (3) et grille externe supplémentaire (13) peuvent éventuellement être solidarisées par soudure ou boulonnage, ou tout autre moyen connu de l'homme du métier, ou encore être fabriquées en une seule pièce.

Grâce au réacteur selon l'invention, au moins une desdites zones mortes (BI) ou (BSm, BSf) présente un volume résiduel VR, (volume qu'on définit comme le volume non atteint par le flux de procédé à traiter), inférieur à 50% du volume total VT de ladite zone dans ce même réacteur. De préférence, ledit volume résiduel VR reste compris entre 1% et 45% du volume VT, de manière plus préférée entre 2% et 30% du volume VT, et de manière plus préférée entre 2 et 15% du volume VT.

Selon un ou plusieurs modes de réalisation du réacteur selon l'invention, la surface de la grille interne (2) comporte dans sa partie inférieure un ou des morceaux (7) de plaque pleine, et une plaque perforée comportant une zone de perforation spécifique (14), c'est-à-dire avec des perforations différentes de celles du reste de la grille interne (2).

Selon un ou plusieurs modes de réalisation, la surface de la grille interne (2) comporte dans sa partie supérieure un ou des morceaux (7) de plaque pleine, et une plaque perforée comportant une zone de perforation spécifique (14), c'est-à-dire avec des perforations différentes de celle du reste de la grille interne (2).

Selon un ou plusieurs modes de réalisation, la grille externe (3) est composée de modules accolés, chacun des modules étant prolongé dans le fond du réacteur de manière à constituer une grille adaptée au fond du réacteur. De préférence lesdits modules accolés sont composés de plusieurs morceaux assemblés.

De préférence, le réacteur selon l'invention est un réacteur en lit mobile. C'est-à-dire que le catalyseur circule dans le réacteur selon l'invention, de préférence du haut vers le bas du réacteur en écoulement gravitaire, mais une circulation inverse du catalyseur est toutefois possible.

Selon un ou plusieurs modes de réalisation d'un réacteur en lit mobile selon l'invention, la série de tubulures d'introduction du catalyseur (6), débouche dans une zone annulaire à section trapézoïdale (BSm) dans laquelle le catalyseur est partiellement mis en contact avec le flux procédé à traiter, la géométrie de ladite section trapézoïdale étant telle que la grille externe (3) est prolongée vers le haut et ne comporte pas de partie de plaque pleine.

Selon un ou plusieurs modes de réalisation d'un réacteur en lit mobile selon la présente invention, une plaque pleine inclinée d'un angle θ par rapport à l'horizontal, angle θ supérieur à l'angle de talus, délimite la zone catalytique annulaire au-dessus de la grille interne (2). De préférence la partie supérieure de la grille interne (2) est munie d'une plaque perforée comportant, dans sa partie supérieure, une zone de perforation spécifique (14) avec des perforations différentes de celle du reste de la grille interne (2).

Selon un ou plusieurs modes de réalisation de l'invention, le réacteur selon l'invention est en lit fixe, c'est-à-dire que le catalyseur est immobilisé dans un lit interne au réacteur.

Dans un réacteur en lit fixe à écoulement radial du flux de procédé à traiter selon l'invention, ledit catalyseur est généralement disposé entre une grille externe (3) située en périphérie du réacteur et une grille interne (2) située sensiblement au centre du réacteur..

De préférence, le lit de catalyseur est situé entre une plaque pleine (17) sensiblement horizontale, qui isole la partie supérieure du lit catalytique de la tête du réacteur, et un lit de billes inertes qui remplit le fond du réacteur.

Dans le cas d'un réacteur en lit fixe, ledit réacteur comprend comme dans les autres types de réacteurs selon l'invention une grille externe supplémentaire (13) adaptée au fond du réacteur, ladite grille se situant dans le prolongement de la grille externe (3).

En outre, selon un ou plusieurs modes de réalisation, une seconde grille externe supplémentaire (18) peut être ajoutée au-dessus de la grille externe (3) et dans son prolongement. La forme de ladite grille (18) est de préférence adaptée à celle de la tête du réacteur, notamment lorsque ladite grille est au moins en partie placée dans la partie courbe de la virole. Cette seconde grille supplémentaire (18) est de préférence installée dans cas d'u réacteur en lit fixe.

La présente invention concerne également l'utilisation des réacteurs à écoulement radial selon l'invention dans des procédés de raffinage ou de pétrochimie sélectionnés de préférence parmi les procédés suivants : le reformage régénératif des essences, l'isomérisation squelettale des essences, la métathèse des oléfines, l'oligocraquage, la déshydrogénation des paraffines ou des aromatiques, le procédé de production d'ammoniaque.

### DESCRIPTION DETAILLEE DES FIGURES

La figure 1 représente un réacteur en lit radial mobile muni d'internes selon l'art antérieur. Le flux procédé à traiter, c'est-à-dire la charge, est introduite par la tubulure (4) du réacteur et se répartit dans la zone de distribution (9) du flux procédé située entre l'enveloppe externe ou virole (1), c'est-à-dire la paroi du réacteur, et la grille externe (3), ladite grille externe (3), étant constitué d'un dispositif d'un seul tenant constituant un cylindre continu appelé panier extérieur.

Le catalyseur est introduit en haut du réacteur par une série de tubulures (6), débouchant chacune dans une partie conique centrée (BSm) délimitée par les cônes (10a) au bout des tubulures (6) et sur le milieu du lit catalytique et permettant au catalyseur de se répartir dans toute la zone catalytique annulaire (5), qui se situe entre la grille externe (3) et la grille interne (2). Les parties coniques (BSm) centrées sont constituées de morceaux de plaques pleines. L'axe vertical des parties coniques passe au milieu du lit catalytique. Préférentiellement, l'angle du cône par rapport à une ligne horizontale doit être supérieur à l'angle de talus.

Lesdites parties coniques (BSm) aboutissent dans la partie la plus haute du lit catalytique (5). Dans cette partie la plus haute du lit catalytique, la grille externe comporte des morceaux (7) de plaque pleine.

Le flux procédé à traiter traverse le lit catalytique de manière sensiblement horizontale et perpendiculaire à la circulation du catalyseur qui est gravitaire, c'est dire sensiblement verticale. A la sortie du lit catalytique (5), le flux procédé traité est collecté dans le conduit central ou grille interne (2) et sort du réacteur par la tubulure (11).

La grille externe (3) repose, dans sa partie basse, sur un anneau support plein (8) soudé sur l'enveloppe du réacteur (1). Elle est, en général, fixée par des moyens de fixation démontables, par exemple, des clavettes ou des boulons ou des points de soudure (appelés « tack welding » dans la terminologie anglo-saxonne).

La grille interne (2) repose, en général, sur un anneau support soudé (non représenté) dans le fond du réacteur à la périphérie de la tubulure de sortie du flux procédé traité (11). Elle est, en général, fixé par des moyens de fixation démontables, par exemple, des clavettes ou des boulons ou des points de soudure. Dans cette partie la plus basse du lit catalytique (5), la grille interne (2) comporte au moins un morceau (7) de plaque pleine.

Le catalyseur s'écoule progressivement par gravité de haut en bas de la zone catalytique. Typiquement, le catalyseur est soutiré par le bas, par une ou plusieurs tubulures de sortie (12). Un élévateur (« lift » selon la terminologie anglo-saxonne) permet de transporter le catalyseur soutiré dans la partie supérieure de la zone catalytique du réacteur suivant ou vers le régénérateur situé après le dernier réacteur au moyen d'un fluide moteur, par exemple un gaz, de préférence de l'hydrogène.

La figure 2 représente un réacteur en lit radial opéré en lit mobile muni d'internes améliorés selon un des modes de réalisation préférés de la présente invention. Toute la partie haute du réacteur, c'est-à-dire les parties coniques (BSm) en plaques pleines, et les morceaux pleins de l'extrémité supérieure de la grille externe (3), est identique à celle du réacteur représenté dans la figure 1.

Selon un ou plusieurs modes de réalisation, la grille externe (3) repose, dans sa partie basse, sur un anneau support ajouré (8a) qui laisse passer le flux procédé à traiter. Par exemple, l'anneau support est muni d'orifices à intervalles réguliers, ou est discontinu. En dessous de l'anneau support ajouré, est ajouté par rapport à l'art antérieur, une grille externe adaptée au fond du réacteur (13).

Selon un ou plusieurs modes de réalisation, dans le fond du réacteur, la surface de la grille interne (2) comportant un ou des morceaux (7) de plaque pleine est minimisée comparée à la figure 1.

De plus, contrairement à l'arrangement présenté dans la figure 1, la partie inférieure de la grille interne (2) peut avantageusement avoir une plaque perforée comportant, dans sa partie inférieure, une zone de perforation spécifique (14) avec des perforations différentes de celle du reste de la grille.

Comparé à la figure 1, l'arrangement selon le mode de réalisation présentée dans la figure 2, permet de réduire le volume des zones (BI) dans le fond du réacteur, lesdites zones étant dans l'enceinte du réacteur et comportant du catalyseur, sans être traversées par le flux procédé à traiter. C'est-à-dire que ces zones (BI) qui sont inefficaces du point de vue de la réaction chimique (zones mortes) dans l'art antérieur, deviennent au moins en partie efficaces dans le réacteur selon l'invention. Le fait de réduire le volume des zones mortes engendre un gain d'efficacité globale du réacteur.

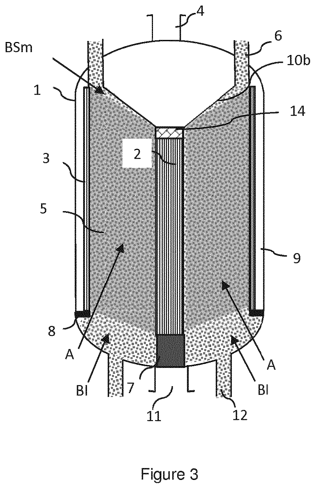

La figure 3 représente un réacteur en lit radial opéré en lit mobile muni d'internes améliorés selon un mode de réalisation préféré de l'invention. Toute la partie basse du réacteur, c'est-à-dire l'anneau support (8) et la grille interne (2) comportant dans sa partie inférieure au moins un morceau (7) de plaque pleine, est identique à celle du réacteur représenté dans la figure 1.

Le catalyseur est introduit en haut du réacteur, par une série de tubulures (6), débouchant dans une zone annulaire à section trapézoïdale (BSm) dans laquelle le catalyseur est partiellement mis en contact avec le flux procédé à traiter. Les tubulures (6) peuvent avantageusement comporter une partie conique permettant au catalyseur de se répartir dans toute la zone catalytique annulaire. A la différence de la figure 1, la géométrie de la section trapézoïdale est telle que la grille externe (3) est prolongée vers le haut par rapport à la figure 1, et ne comporte pas de partie de plaque pleine.

L'extrémité supérieure de la grille externe (3) est située au-dessus de l'extrémité supérieure de la grille interne (2). Une plaque pleine inclinée d'un angle θ par rapport à l'horizontal supérieur à l'angle de talus, délimite la zone catalytique annulaire au-dessus de la grille interne (2). Contrairement à l'arrangement présenté dans la figure 1, la partie supérieure de la grille interne (2) peut avantageusement avoir une plaque perforée comportant, dans sa partie supérieure, une zone de perforation spécifique (14) avec des perforations différentes de celle du reste de la grille.

Comparé à la figure 1 et à la figure 2, l'arrangement selon le mode de réalisation de l'invention présenté dans la figure 3, permet de réduire les zones (BSm), en tête du réacteur, lesdites zones étant dans l'enceinte du réacteur et comportant du catalyseur, sans être traversées par le flux procédé à traiter dans le réacteur selon l'art antérieur (figure 1), les zones (BSm) étant donc des zones inefficaces du point de vue de la réaction chimique. Le fait de réduire le volume des zones mortes engendre un gain d'efficacité globale du réacteur.

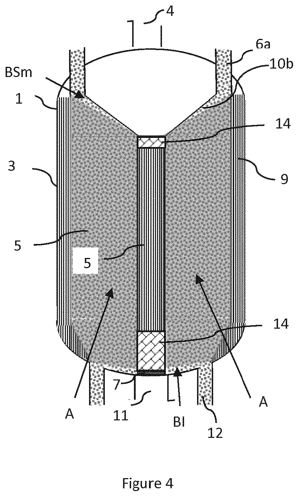

La figure 4 représente un réacteur radial en lit mobile muni d'internes améliorés selon un mode de réalisation préféré selon l'invention.

Selon un ou plusieurs modes de réalisation, la grille externe (3) est composée de modules externes accolés, chacun des modules étant prolongé dans le fond et/ou la tête du réacteur de manière à constituer une grille adaptée au fond et/ou à la tête du réacteur. Les modules accolés peuvent être composés de plusieurs morceaux assemblés ou d'un seul tenant. Ils sont préférentiellement, composés de morceaux assemblés.

Le catalyseur est introduit en haut du réacteur, par une série de tubulures (6), débouchant dans la zone annulaire à section trapézoïdale (10b) similaire à celle de la figure 3.

Contrairement à l'arrangement présenté dans la figure 1, les parties inférieure et supérieure de la grille interne peuvent avantageusement avoir une plaque perforée comportant, dans sa partie inférieure et ou dans sa partie supérieure, des zones de perforation spécifique (14) avec des perforations différentes de celle du reste de la grille.

Comparé à la figure 1, l'arrangement selon le mode de réalisation de l'invention présenté dans la figure 4, permet de réduire le volume des zones (BSm) et (BI) en tête et en fond du réacteur qui sont inefficaces (zones mortes).

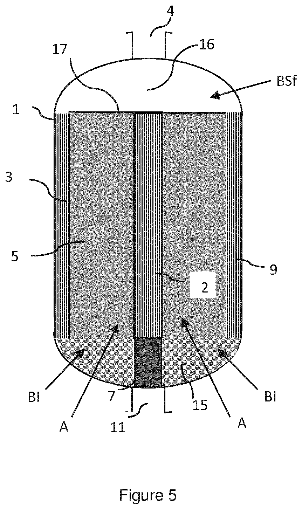

La figure 5 représente un réacteur radial opéré en lit fixe selon l'art antérieur.

Le flux procédé à traiter, c'est-à-dire la charge, est introduite par la tubulure (4) du réacteur et se répartit dans la tête du réacteur (16) puis dans la zone de distribution (9) du flux procédé située entre l'enveloppe externe ou virole (1) et la grille externe (3), ladite grille externe, étant constitué de plusieurs modules accolés suspendus dans le réacteur.

Le lit de catalyseur se situe entre la plaque pleine (7) qui isole la partie supérieure du lit catalytique de la tête du réacteur, qui se situe généralement au niveau de la ligne de tangence du réacteur, et un lit de billes inertes qui remplit le fond du réacteur, généralement à partir de la ligne de tangence inférieure.

Le flux procédé à traiter traverse le lit catalytique de manière sensiblement horizontale et perpendiculaire au lit de catalyseur (5). A la sortie du lit catalytique, le flux procédé traité est collecté dans le conduit central ou grille interne (2) et sort du réacteur par la tubulure (11).

La grille interne (2) repose, en général, sur un anneau support soudé (non représenté) dans le fond du réacteur à la périphérie de la tubulure de sortie du flux procédé traité (11). Dans cette partie la plus basse du lit catalytique, la grille interne (2) comporte au moins un morceau (7) de plaque pleine.

La zone catalytique traversée par le flux procédé à traiter est matérialisée par la zone grisée (A).

La figure 6 représente un réacteur en lit radial opéré en lit fixe muni d'internes améliorés selon un mode de réalisation préféré selon l'invention.

Selon un ou plusieurs modes de réalisation, la grille externe (3) est composée de modules externes accolés, chacun des modules étant prolongé dans le fond et/ou dans la tête du réacteur de manière à constituer une grille adaptée au fond et/ou à la tête. Les modules accolés peuvent être composés de plusieurs morceaux assemblés ou d'un seul tenant. Ils sont préférentiellement, composés de morceaux assemblés.

Comparé à la figure 5, la partie supérieure du lit catalytique pénètre dans la tête du réacteur et la partie inférieure du lit catalytique pénètre dans le fond. La hauteur du lit de billes inertes situés dans le fond du réacteur est réduite comparé à la figure 1, d'où une diminution du volume des zones mortes (BI) et (BSf), et une augmentation de l'efficacité du réacteur.

Contrairement à l'arrangement présenté dans la figure 5, les parties inférieure et supérieure de la grille interne (2) peuvent avantageusement avoir une plaque perforée comportant, dans sa partie inférieure et ou dans sa partie supérieure, des zones de perforation spécifique (14) avec des perforations différentes de celles du reste de la grille.

## Revendications

1. Réacteur à écoulement radial du flux de procédé à traiter comprenant une virole (5), des moyens d'introduction du flux de procédé à traiter (4) et de sortie des effluents (11), une zone de distribution dudit flux de procédé (9), éventuellement des jambes d'introduction (6) du catalyseur, des grilles externe (3) et interne (2) permettant au flux de procédé à traiter de circuler depuis une grille externe (3) jusqu'à une grille interne (2) située sensiblement au centre du réacteur, ou inversement de la grille interne (2) vers la grille externe (3), réacteur qui comprend en outre au moins une grille externe supplémentaire (13, 18) présentant une forme adaptée à celle du fond du réacteur ou de la tête du réacteur, ladite grille supplémentaire (13, 18) se situant dans le prolongement de la grille externe (3), dans lequel la surface de la grille interne (2) comporte dans sa partie supérieure et/ou sa partie inférieure un ou des morceaux (7) de plaque pleine, et une plaque perforée comprenant une zone avec des perforations spécifiques (14), différentes de celle du reste de la grille interne (2).

2. Réacteur selon la revendication 1, dans lequel la grille externe (3) repose dans sa partie basse sur un support, de préférence un anneau support (8a).

3. Réacteur selon la revendication 2, dans lequel ledit support est ajouré afin de laisser passer le flux de procédé à traiter.

4. Réacteur selon l'une des revendications 1 à 3, dans lequel la grille externe (3) est composée de modules accolés, reposant sur un anneau support ou étant suspendus, chacun des modules étant prolongé dans le fond du réacteur de manière à constituer une grille adaptée au fond du réacteur.

5. Réacteur selon la revendication 4, dans lequel lesdits modules accolés sont composés de plusieurs morceaux assemblés.

6. Réacteur selon l'une des revendications 1 à 5, dans lequel ledit réacteur est un réacteur à lit mobile.

7. Réacteur à lit mobile selon la revendication 6, dans lequel la série de tubulures d'introduction du catalyseur (6), débouche dans une zone annulaire à section trapézoïdale (BS) dans laquelle le catalyseur est partiellement mis en contact avec le flux procédé à traiter, la géométrie de ladite section trapézoïdale étant telle que la grille externe (3) est prolongée vers le haut et ne comporte pas de partie de plaque pleine.

8. Réacteur à lit mobile selon la revendication 6, dans lequel une plaque pleine inclinée d'un angle θ par rapport à l'horizontal, angle θ supérieur à l'angle de talus, délimite la zone catalytique annulaire au-dessus de la grille interne (2).

9. Réacteur selon l'une des revendications 1 à 5, dans lequel ledit réacteur est un réacteur à lit fixe dans lequel le catalyseur est disposé entre une grille externe (3) située en périphérie du réacteur et une grille interne (2) située sensiblement au centre du réacteur.

10. Réacteur à lit fixe selon la revendication 9, dans lequel le lit de catalyseur est situé entre une plaque pleine (17) sensiblement horizontale qui isole la partie supérieure du lit catalytique de la tête du réacteur, et un lit de billes inertes qui remplit le fond du réacteur.

11. Réacteur à lit fixe selon l'une des revendications 9 ou 10, dans lequel une seconde grille externe supplémentaire (18) est ajoutée au-dessus de la grille externe (3) et dans son prolongement.

12. Utilisation du réacteur selon l'une des revendications 1 à 11, dans un procédé de raffinage ou de pétrochimie.

13. Utilisation selon la revendication 12, dans laquelle le procédé de raffinage ou de pétrochimie est sélectionné parmi les procédés suivants : reformage catalytique des essences, isomérisation squelettale des essences, métathèse des oléfines, oligocraquage, déshydrogénation des paraffines ou des aromatiques, procédé de production d'ammoniaque.

## Patentansprüche

1. Reaktor mit ringförmiger Strömung des zu behandelnden Verfahrensstroms, umfassend eine Hülle (5), Mittel zum Einleiten des zu behandelnden Verfahrensstroms (4) und zum Ausleiten von Abwässern (11), eine Zone zum Verteilen des Verfahrensstroms (9), gegebenenfalls Einleitungsschenkel (6) für den Katalysator, ein äußeres (3) und ein inneres Gitter (2), so dass der zu behandelnde Verfahrensstrom von einem äußeren Gitter (3) zu einem inneren Gitter (2), das sich im Wesentlichen in der Mitte des Reaktors befindet, oder umgekehrt vom inneren Gitter (2) zum äußeren Gitter (3) zirkulieren kann, wobei der Reaktor außerdem mindestens ein zusätzliches äußeres Gitter (13, 18) umfasst, dessen Form an diejenige des Bodens des Reaktors oder des Kopfes des Reaktors angepasst ist, wobei sich das zusätzliche Gitter (13, 18) in der Verlängerung des äußeren Gitters (3) befindet, wobei die Oberfläche des inneren Gitters (2) in ihrem oberen Abschnitt und/oder ihrem unteren Abschnitt ein oder mehrere massive Plattenstücke (7) und eine Lochplatte umfasst, die eine Zone mit spezifischen, von denjenigen des übrigen inneren Gitters (2) verschiedenen Perforationen (14) umfasst.

2. Reaktor nach Anspruch 1, wobei das äußere Gitter (3) in seinem unteren Abschnitt auf einer Stütze, vorzugsweise auf einem Stützring (8a), ruht.

3. Reaktor nach Anspruch 2, wobei die Stütze perforiert ist, damit der zu behandelnde Verfahrensstrom hindurchgeleitet werden kann.

4. Reaktor nach einem der Ansprüche 1 bis 3, wobei das äußere Gitter (3) aus aneinander gereihten Modulen besteht, die auf einem Stützring ruhen oder aufgehängt sind, wobei jedes der Module so in den Boden des Reaktors hinein verlängert ist, dass ein an den Boden des Reaktors angepasstes Gitter gebildet wird.

5. Reaktor nach Anspruch 4, wobei die aneinander gereihten Module aus mehreren zusammengesetzten Stücken bestehen.

6. Reaktor nach einem der Ansprüche 1 bis 5, wobei der Reaktor ein Fließbettreaktor ist.

7. Fließbettreaktor nach Anspruch 6, wobei die Reihe von Rohren zum Einbringen des Katalysators (6) in eine ringförmige Zone mit trapezförmigem Abschnitt (BS) mündet, in der der Katalysator zum Teil mit dem zu behandelnden Verfahrensstrom in Kontakt gebracht wird, wobei die Geometrie des trapezförmigem Abschnitts derart ist, dass das äußere Gitter (3) nach oben hin verlängert ist und keinen massiven Plattenabschnitt umfasst.

8. Fließbettreaktor nach Anspruch 6, wobei eine in einem Winkel θ in Bezug auf die Horizontale geneigte massive Platte, wobei der Winkel θ größer als der Reibungswinkel ist, die ringförmige Katalysezone oberhalb des inneren Gitters (2) begrenzt.

9. Reaktor nach einem der Ansprüche 1 bis 5, wobei der Reaktor ein Festbettreaktor ist, in dem der Katalysator zwischen einem äußeren Gitter (3), das sich am äußeren Umfang des Reaktors befindet, und einem inneren Gitter (2), das sich im Wesentlichen in der Mitte des Reaktors befindet, angeordnet ist.

10. Festbettreaktor nach Anspruch 9, wobei sich das Katalysatorbett zwischen einer im Wesentlichen horizontalen massiven Platte (17), die den oberen Abschnitt des Katalysebetts des Reaktorkopfes isoliert, und einem Bett aus inerten Kugeln, das den Boden des Reaktors füllt, befindet.

11. Festbettreaktor nach einem der Ansprüche 9 oder 10, wobei ein zusätzliches zweites äußeres Gitter (18) oberhalb des äußeren Gitters (3) und in dessen Verlängerung hinzugefügt ist.

12. Verwendung eines Reaktors nach einem der Ansprüche 1 bis 11 bei einem Raffinations- oder petrochemischen Verfahren.

13. Verwendung nach Anspruch 12, wobei das Raffinations- oder petrochemische Verfahren aus den folgenden Verfahren ausgewählt ist: katalytische Reformierung von Benzinen, Skelettisomerisierung von Benzinen, Metathese von Olefinen, Oligocracking, Dehydrierung von Paraffinen oder Aromaten, ein Verfahren zur Herstellung von Ammoniak.

## Claims

1. Radial-flow reactor in which the process stream that is to be treated flows radially, comprising a shroud (5), process-stream introduction means (4) and effluent-outlet means (11), a process-stream distribution zone (9), possibly catalyst introduction legs (6), outer (3) and inner (2) screens allowing the process stream that is to be treated to circulate from an outer screen (3) as far as an inner screen (2) situated substantially at the centre of the reactor, or conversely from the inner screen (2) towards the outer screen (3), which reactor further comprises at least one additional outer screen (13, 18) having a shape suited to that of the bottom of the reactor or the top of the reactor, said additional screen (13, 18) being situated in the continuation of the outer screen (3), wherein the surface of the inner screen (2) comprises, in its upper part and/or its lower part, one or more pieces (7) of solid plate, and a perforated plate comprising a zone having specific perforations (14) different from that of the rest of the inner screen (2).

2. Reactor according to Claim 1, wherein the outer screen (3) rests at its bottom part on a support, preferably a support ring (8a).

3. Reactor according to Claim 2, wherein said support has openings in order to allow through the process stream that is to be treated.

4. Reactor according to one of Claims 1 to 3, wherein the outer screen (3) is made up of adjacent modules, resting on a support ring or suspended, each of the modules being extended into the bottom of the reactor so as to constitute a screen suited to the bottom of the reactor.

5. Reactor according to Claim 4, wherein said adjacent modules are made up of several assembled pieces.

6. Reactor according to one of Claims 1 to 5, wherein said reactor is a moving bed reactor.

7. Moving bed reactor according to Claim 6, wherein the series of catalyst introduction nozzles (6) opens into an annular zone of trapezoidal cross section (BS) in which the catalyst is brought partially into contact with the process stream that is to be treated, the geometry of said trapezoidal section being such that the outer screen (3) is extended upwards and does not comprise a solid-plate part.

8. Moving bed reactor according to Claim 6, wherein a solid plate inclined by an angle θ with respect to the horizontal, the angle θ being greater than the angle of repose, delimits the annular catalytic zone above the inner screen (2).

9. Reactor according to one of Claims 1 to 5, wherein said reactor is a fixed bed reactor in which the catalyst is placed between an outer screen (3) situated at the periphery of the reactor and an inner screen (2) situated substantially at the centre of the reactor.

10. Fixed bed reactor according to Claim 9, wherein the catalyst bed is situated between a substantially horizontal solid plate (17) which isolates the upper part of the catalytic bed from the top of the reactor, and a bed of inert beads which fills the bottom of the reactor.

11. Fixed bed reactor according to one of Claims 9 and 10, wherein a second additional outer screen (18) is added above the outer screen (3) and in the continuation thereof.

12. Use of the reactor according to one of Claims 1 to 11 in a refinery or petrochemical process.

13. Use according to Claim 12, wherein the refinery or petrochemical process is selected from the following processes: catalytic reforming of petroleum, skeletal isomerization of petroleum, olefin metathesis, oligomeric cracking, dehydrogenation of paraffins or aromatics, ammonia production process.
